# EUROPEAN PATENT SPECIFICATION

(11) **EP 3 911 981 B1**
(45) Date of publication and mention of the grant of the patent: **18.02.2026**
(21) Application number: 20741527.4
(22) Date of filing: 17.01.2020
(51) Int. Cl.: G02B 6/04, G02B 6/44, G02B 6/46, H01B 7/00

(54) **UNITIZED FIBER OPTIC CABLES**
VEREINTE FASEROPTISCHE KABEL
CÂBLES À FIBRES OPTIQUES UNITAIRES

(30) Priority: 19.01.2019 US 201962794618 P; 19.09.2019 US 201962902664 P
(43) Date of publication of application: 24.11.2021
(73) Proprietor: Corning Research & Development Corporation, Corning, New York 14831 (US)
(72) Inventor: AKINOSHO, Rebecca Ruth, Mooresville, North Carolina 28117 (US); CHAPMAN, Bradley Grant, Hickory, North Carolina 28602 (US); HURLEY, William Carl, Hickory, North Carolina 28601 (US)
(74) Representative: Sturm, Christoph
(86) International application number: PCT/US2020/014016
(87) International publication number: WO 2020/150566

(56) References cited:
- WO-A1-2018/092880
- US-A- 5 982 965
- US-A1- 2003 068 145
- US-A1- 2012 243 841
- US-A1- 2015 168 660
- US-A1- 2015 370 026
- US-A1- 2018 157 002

## Description

### CROSS-REFERENCE TO RELATED APPLICATIONS

This application claims the benefit of priority under 35 U.S.C. § 119 of U.S. Provisional Application Serial No. 62/794,618 filed on January 19, 2019, and Provisional Application Serial No. 62/902,664 filed on September 19, 2019.

### BACKGROUND

The present disclosure relates generally to fiber optic cables, and particularly unitized fiber optic cables.

Fiber optic cables have seen increased use in a wide variety of fields, including various electronics and telecommunications fields. Fiber optic cables contain or surround one or more optical fibers. The cable provides structure and protection for the optical fibers within the cable.

With the increased use of fiber optic cables, and particularly the growth in the use of communications equipment and cables in buildings, smaller and more compact fiber optic cables are needed.

A unitized fiber optic cable is a cable that contains a number of unit or subunit cables. Each of these unit or subunit cables contains multiple optical fibers, typically surrounded by a unit/subunit cable jacket. One reason for separating optical fibers into separate units within a unitized cable is to simplify access to individual optical fibers and aid in identifying individual optical fibers. Higher fiber count cables generally comprise unitized cables, including individual unit cables.

These prior art unit cables typically contain six, twelve, or more tight buffered optical fibers, having a tight buffer layer or coating that forms a part of the individual optical fibers, and tensile strength members, such as aramid fibers, within a unit/subunit cable jacket. Typically, aramid fibers are located between the tight buffered optical fibers and the unit cable jacket, where the aramid fibers will keep the tight buffered optical fibers from adhering or sticking to the unit/subunit cable jacket. Sticking could otherwise occur if a unit/subunit cable jacket is extruded around tight buffered fibers, containing the same resin that is used in the unit cable jacket.

In prior art high fiber count cables, the unit/subunit cable jacket as well as the tensile strength members are relied upon to protect the optical fibers from damage. As a result, the thickness of prior art unit/subunit cable jacket is on the order of 0.5 millimeters (mm), and the unit/subunit cable jackets typically contain a polymer, such as polyvinyl chloride, having a concentration of between 50% and 75%. Prior art unit cables can also include a glass reinforced plastic (GRP) anti-buckling member, typically located at the center of the optical fibers.

In these prior art unitized cables, several unit cables are bundled or stranded together within the outer unitized cable jacket to form a single high fiber count cable. This prior art outer unitized cable jacket does not significantly protect constituent optical fibers from tensile or compressive loads. Each individual unit cable instead includes tensile and compressive load bearing members.

Examples of unitized fiber optic cables can be found in U.S. Pat. No. 6,249,628 and in European Patent Application EP 1 041 420 A1. The unitized fiber optic cables disclosed therein each include a plurality of unit or subunit cables in which a layer of dielectric strength members surrounds individual components in each unit cable. These dielectric strength members surround cables that can include at least two optical fibers in turn surrounded by at least one generally round buffer tube.

Each optical fiber has a glass core and inner and outer primary coatings of a thermoplastic surrounded by a coloring layer. A tight buffered coating over the coloring layer is not altogether necessary, but may be included in some applications. However, a generally round buffer tube with a nominal thickness of 0.170 mm and a maximum wall thickness of 0.240 mm surrounds the two optical fibers. These buffer tubes shown in the prior art are examples of loose buffer tubes which are not bonded to the optical fibers, but which can be extruded around the glass fiber and are employed for fiber protection and segregation. In tight buffered cables, a protective thermoplastic coating is extruded directly on the individual glass fibers.

The outer diameter of these prior art cables is significant because space is often limited in locations, such as risers and trays in which multiple unitized cables are to be located or at entrances and exits to wiring closets and other similar locations. Therefore, a reduction in the diameter of unitized cables, without compromising their physical integrity is desirable.

US 2015 / 0 168 660 A1 discloses a rugged micromodule cable. The cable includes: a plurality of fiber optic subunits, each fiber optic subunit including a plurality of optical fibers; a subunit jacket surrounding each fiber optic subunit; and a cable jacket surrounding the plurality of fiber optic subunits, wherein at least some of the plurality of fiber optic subunits are shaped into non-circular shapes.

Other prior art is known from US 2015 / 0 370 026 A1, from WO 2018 / 092 880 A1 and from US 2018 / 0 157 002 A1.

### SUMMARY

Disclosed and claimed herein are various configurations of unitized fiber optic cables, which are more compact than prior art unitized fiber optic cables. The types of unitized fiber optic cables disclosed herein may, for example, be preferable for use in a data center application. The fact that these cables may be used in the indoor environment to route to a rack, for example, enables smaller diameter cables, as not as much environmental protection is required. In this regard, and in accordance with aspects of the present disclosure, the downsizing, removal, or reconfiguration of certain cable elements, such as strength elements or the jacket wall thickness provide for reduced diameter cables while maintaining or increasing the flexibility necessary for routing in often very confined spaces.

The present invention provides a unitized fiber optic cable according to claim 1. The present invention further provides an installation assembly according to claim 12.

The subunit jacket of each subunit may be thinner than conventional subunit jackets, allowing each subunit of the plurality of subunits within the cable jacket to be amorphic. The amorphic nature of the subunits allows a better fill ratio within the cable jacket than conventional cables having standard round subunit jackets, which in turn enables a reduction of the diameter of the cable jacket when compared to conventional cables. As described herein, the amorphous nature of the subunits herein typically allows the subunits to resemble non-circular shapes when viewed in cross-section.

Preferably, the subunit jacket has a wall thickness of about 0.30 mm or less and is flexible enough to bend into non-circular cross-sectional shapes when stranded into a cable. Also, preferably each subunit jacket has a low tear strength that enables access to the optical fibers within without the use of tools that could damage the fibers inside. The subunits may also be stranded to provide a helical fiber length greater than the cable length; and the cable may include strength members disposed outside the subunits. In accordance with aspects of the present disclosure, the strength members may be GRP rods or tensile yarns disposed axially within the cable such that a length of the strength members is less than the length of the optical fibers.

In accordance with yet other aspects of the present disclosure, the tight buffered fibers included in one or more of the fiber optic subunits has a diameter of at least 0.40 mm, with each subunit excluding tensile yarns and water blocking gel or grease.

In accordance with yet other aspects of the present disclosure, the tight buffered optical fibers are preferably from 0.02 % to 1.5 % longer than the strength members; the diameter of the tight-buffer may range from 0.40 mm to 1.00 mm and more preferably between 0.85 mm and 0.95 mm, and the cable has packing density of tight buffered fibers within the cable that is greater than 45 fibers/cm².

### BRIEF DESCRIPTION OF THE DRAWINGS

The accompanying drawings are included to provide a further understanding and are incorporated in and constitute a part of this specification. The drawings illustrate one or more embodiment(s), and together with the description serve to explain principles and the operation of the various embodiments.
FIG. 1 is a cross-sectional view of a prior art unitized fiber optic cable;
FIG. 2 is a cross-sectional view of a unitized fiber optic cable in accordance with aspects of the present disclosure;
FIG. 3 is a cross-sectional view of another prior art unitized fiber optic cable;
FIG. 4 is a cross-sectional view of a subunit included in the prior art unitized fiber optic cable shown in FIG. 3;
FIG. 5 is a cross-sectional view of a subunit included in the unitized fiber optic cable shown in FIG. 2 in accordance with aspects of the present disclosure;
FIGS. 6A and 6B further illustrate aspects of the prior art subunit shown in FIG. 4 and the subunit of FIG. 5 in accordance with aspects of the present disclosure;
FIG 7 is a graphical representation, showing the stiffness of embodiments disclosed herein compared to prior art cable configurations; and
FIGS. 8A and 8B illustrate subunits in a state of use in splice cassettes in accordance with aspects of the present disclosure.

The figures are not necessarily to scale. Like numbers used in the figures may be used to refer to like components. However, it will be understood that the use of a number to refer to a component in a given figure is not intended to limit the component in another figure labeled with the same number.

### DETAILED DESCRIPTION

It is to be understood that the embodiments of the present disclosure are not limited to the described exemplary embodiments but are to be controlled by the limitations set forth in the claims.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

Spatially related terms, including but not limited to, "lower," "upper," "beneath," "below," "above," and "on top," if used herein, are utilized for ease of description to describe spatial relationships of an element(s) to another. Such spatially related terms encompass different orientations of the device in use or operation in addition to the particular orientations depicted in the figures and described herein. For example, if an object depicted in the figures is turned over or flipped over, portions previously described as below or beneath other elements would then be above those other elements.

Cartesian coordinates are used in some of the Figures for reference and are not intended to be limiting as to direction or orientation.

For purposes of description herein, the terms "upper," "lower," "right," "left," "rear," "front," "vertical," "horizontal," "top," "bottom," "side," and derivatives thereof, shall relate to the disclosure as oriented with respect to the Cartesian coordinates in the corresponding Figure, unless stated otherwise. However, it is to be understood that the disclosure may assume various alternative orientations, except where expressly specified to the contrary.

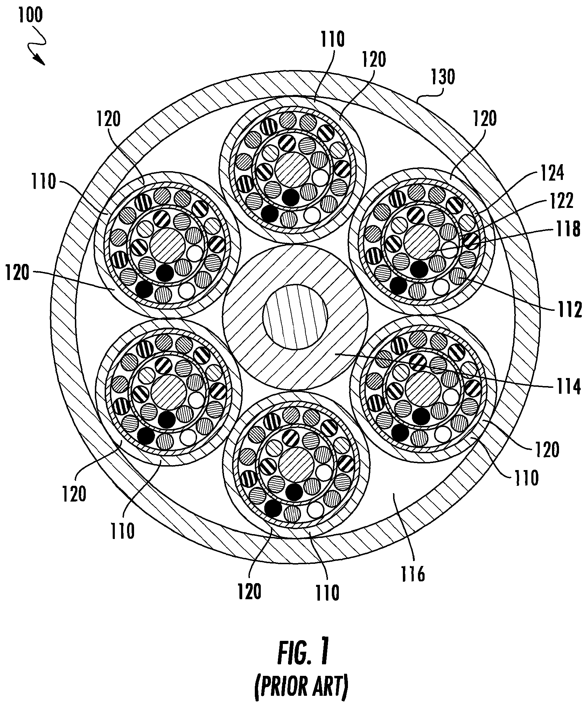

FIG. 1 is a cross-sectional view of a prior art unitized cable 100. Cable 100 includes a cable jacket or layer, shown as outer cable jacket 130 that defines an inner passage or cavity, shown as central bore 116. As will be generally understood, the central bore 116 defines an internal area or region within which the various cable components discussed below are located. Cable 100 includes a plurality of optical fibers supported within or organized into subunits 110. In general, each subunit 110 includes a plurality of individual elongate optical fibers, shown as tight buffered optical fibers 112. In various embodiments, cable 100 includes a plurality of subunits 110, and each subunit 110 includes 2-24 individual tight buffered optical fibers 112. In the specific embodiment shown, cable 100 includes 6 subunits 110, each including 24 tight buffered optical fibers 112. The subunits 110 may be stranded around a central strength member 114, which may be a GRP rod, for example, up-jacketed with a polymer or foam layer to provide additional protection to the fibers in the subunits during bend or crush scenarios, for example. The outer jacket 130, having a circular outer profile, encloses the subunits 110.

As shown in FIG. 1, each subunit 110 includes a subunit jacket 120 that has an inner surface that defines a subunit passage. The tight buffered optical fibers 112 are located within subunit jacket 120 and surround a subunit strength member 118. In specific embodiments, tight buffered optical fibers 112 may be stranded (e.g., wrapped in a pattern such as a helical pattern or an S-Z stranding pattern) around subunit strength member 118. In other embodiments, tight buffered optical fibers 112 are not stranded within subunit jackets 120. In addition, each subunit 110 may also include other components, such as water blocking powder, water blocking or tensile yarns, etc., within subunit jacket 120, as may be needed for various applications.

As shown in FIG. 1, the relatively thick subunit jacket 120 constrains the subunits 110 and the optical fibers 112 to circular shapes which results in a significant amount of free space around and between the subunits 110 within central bore 116 of the cable jacket 130. The term unitized derives from the ability of an installer, for example, to remove the cable jacket 130 to access the individual subunits 110. Due to the protection afforded each subunit 110 by the subunit jacket 120, an individual subunit 110 may then be routed to a location separate from the other subunits 110 and/or from the route of the cable 100. However, due to the relative inflexibility of the subunit 110 caused by the thicker subunit jacket 120 and aspects of the subunit itself such as the central strength member 114 or the presence of tensile yarns, routing of the subunit 110 in confined spaces and/or wherein a relatively small bend radius is required may be difficult. In addition, the relatively thick subunit jacket 120 requires tools to access the tight buffered fibers 112 inside subunit 110, which increases the risk of damage to the fibers 112 during connectorization or splicing, for example.

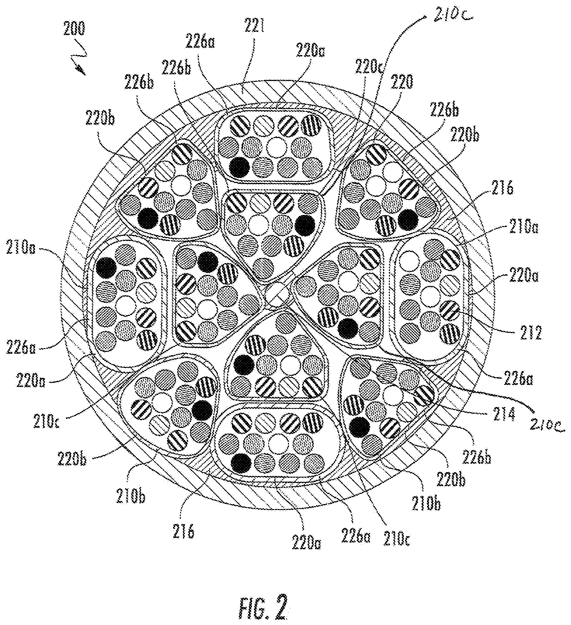

FIG. 2 shows a cross-sectional view of a unitized cable 200 in accordance with aspects of the present disclosure having improved packing density when compared to conventional unitized cables. In this cable configuration, a thin, flexible subunit jacket 220 is preferably loosely applied over a plurality of tight buffered fibers 212 such that the shape of each subunit 210 may change to amorphously fill the central bore 215 of cable 200. By eliminating the circular dimension of a conventional subunit, the subunits 210 of cable 200 can accommodate a reduced inner diameter of outer jacket 221, reducing the free space inside and thereby improving the packing density of the cable 200. To further decrease the size while increasing the flexibility of the cable 200, a central strength member 214 may be provided that has a reduced diameter when compared to conventional strength members such as the strength member 114 shown in FIG. 1.

The tight buffered optical fibers 212 are situated in the subunits 210 to simplify identification of individual units in high count cables of the type commonly employed as premises cables, for example. The representative embodiment of unitized cable 200 depicted herein includes twelve tight buffered optical fibers 212 contained within each subunit jacket 220. This subunit jacket 220 is a relatively thin member that contains a thermoplastic resin. In accordance with aspects of the present disclosure, the subunit jacket 220 may include a polyvinyl chloride resin, plasticizers, additives and fillers, such as talc, chalk, fuller's earth or other inert materials.

The subunit jacket 220 comprises a relatively thin polymeric, non-load-bearing, flexible surrounding member or tube that is not intended to resist mechanical or physical stresses or forces applied to the optical fibers 212 within the subunit 210. The subunit jacket 220 is intended to be relatively weak so that it can be easily severed or torn, preferably peeled apart or separated by the action of one's own fingers. In accordance with aspects of the present disclosure, the subunit jacket 220 is not intended to perform any significant function other than segregating and identifying a portion of the optical fibers 212 contained within a high count, high density, unitized fiber optic cable 200.

The subunits 210 may be fabricated by extruding the subunit jacket 220 over a predetermined group of tight buffered optical fibers 212. The thermoplastic resin used in the subunit jacket 220 is heated to flow during this extrusion process. However, the concentration of the thermoplastic resin forming the subunit jacket 220 is relatively small because of the addition of fillers. There will therefore, be less tendency for the heated resin to adhere to the tight buffer layer surrounding each optical fiber, even if, for example, polyvinyl chloride is present in both the buffer layer and the extruded subunit jacket 220. Example of resins in addition to polyvinyl chloride that can be used to form subunit jacket 220 also include, but are not limited to polyethylene, nylon, UV cured acrylates, fluoroplymers, polyvinyladelene flouride, polypropylene and polyesters. Additionally, a flame retardant package, comprising a low smoke zero halogen (LSZH) additive, may be included in the polymer resin that forms the subunit jacket 220.

In accordance with yet other aspects of the present invention, the addition of fillers to the resin forming the subunit jacket 220 will also reduce the tensile and shear strength of the subunit jacket 220. Because of the type of material used for the subunit jacket 220, a waterblocking yarn placed into the subunit 210 or an individual optical fiber 212 can be pulled to sever the subunit jacket 220, thus acting like a ripcord. In other cases, the subunit jacket may simply be pulled apart through the peeling force of one's own fingers. Elimination of a ripcord from the subunits 210 allows a further reduction in the cross-sectional area and outside diameter of the subunits 210 resulting in denser packaging.

Although not shown specifically in the drawings, unique identification markings can be printed or otherwise placed on the subunit jacket 220. Each optical fiber 212 in the unitized cable 200 can thus be identified by first locating the correct subunit 210 and then relying upon a color coating, for example, on the individual fibers 212 within each subunit 210. The markings on the subunit 210 may be longitudinally repetitive so that a given subunit 210 can be uniquely identified at two locations some distance from each other. Alternatively, color coded subunit jacket 220 or some combination of color coding and printing can used to identify the subunits 210. Common methods of printing include ink jet, print wheels and laser printing. In some cables the unit jackets 22 could be color coded to indicate fiber type and then printed with a unit number or code.

As shown in FIG. 2, the unitized cable 200 may include a plurality of subunits 210a, 210b, 210c surrounded by an outer jacket 221. The plurality of subunits 210a, 210b, 210c, however, have subunit jackets 220a, 220b, 220c configured to be shaped into geometric profiles that are non-circular. The subunit jackets 220a, 220b, 220c may have geometric profiles 226a, 226b of varying shapes/configurations. For example, subunit jackets 220a, 220b, 220c may form into geometric profiles that are substantially oval or circular, while other subunit jackets may have geometric profiles that are substantially triangular. However, the flexibility of the subunit jackets 220 allows for a multitude of geometric shapes that may continuously change for any one subunit 210 along the longitudinal length of the subunit 210.

Although cable 200 may comprise any number of subunits 210, each subunit surrounding any number of tight buffered fibers 212, a preferred embodiment such as the one shown in FIG. 2 has four inner subunits 210 around a central member 214 with the four inner subunits being surrounded generally by eight outer subunits 210, with each of the twelve subunits 210 containing twelve tight buffered fibers 212. The outer diameter of the cable 200 may be substantially reduced due to the design of this cable. Thus, the overall free space in the bore 215 of cable 200 is reduced and the fiber density of the cable 200 is increased. However, a certain amount of free space is specifically provided within each subunit 210 to provide enough room for the buffered fibers 212 to shift with respect to each other in the subunit 210, which greatly enhances the overall flexibility of the cable 200.

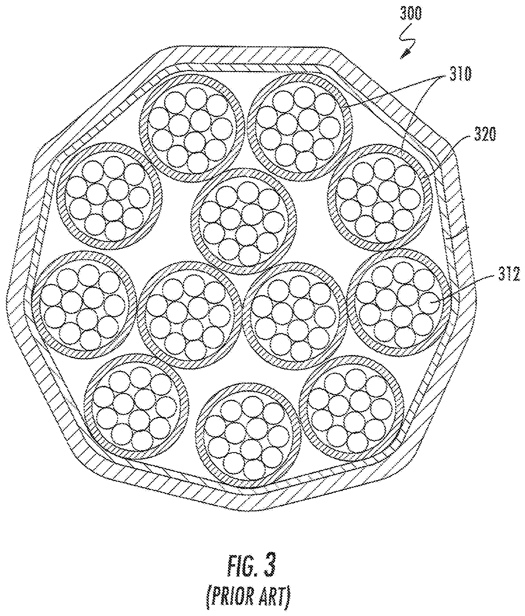

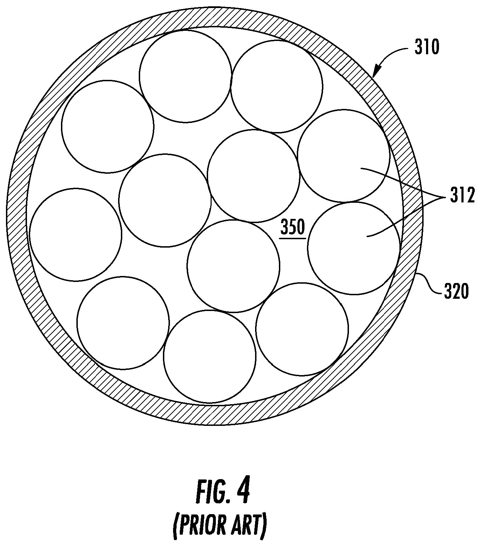

FIG. 3 is a cross-sectional view of a prior art unitized cable 300 which includes a plurality of subunits 310, each subunit 310 having a circular cross section. The subunit jacket 320 is relatively thin and is not relied upon to provide physical protection. However, as shown more closely in FIG. 4, which is the cross-section of a single subunit 310 shown in FIG. 3, the subunit jacket 320 is extruded so tightly around the optical fibers 312 that the optical fibers 312 are not able to shift laterally relative to each other. The internal free space within the subunit 310 is extremely limited. The lack of free space preventing the optical fibers 312 from moving makes the cable 300 less flexible compared to cable 200.

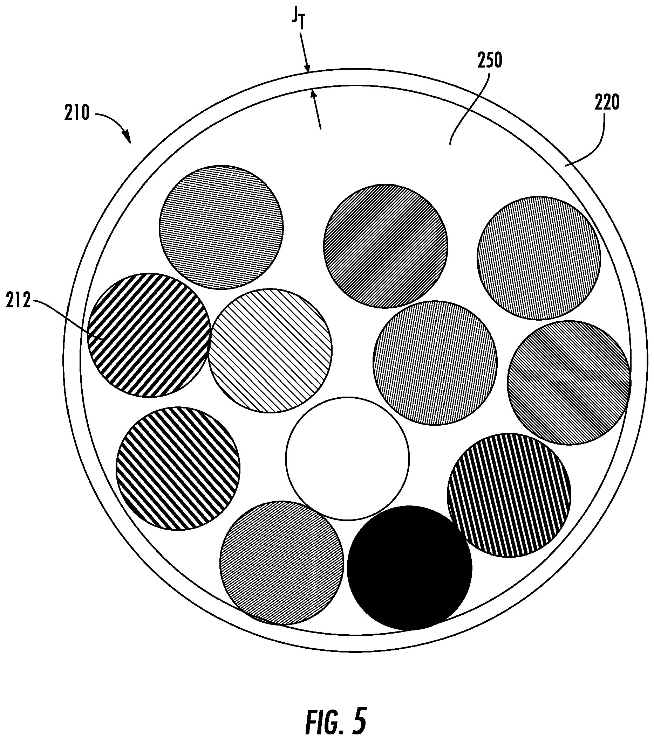

As shown more closely in FIG. 5, which is an enlarged view of a subunit 210 shown in FIG. 2, each outer jacket 211 of cable 200 has an outer jacket thickness J_{T} (FIG. 5) that is thin and flexible. The flexibility and the reduced thickness allow each subunit to be pressed into various shapes to improve the packing density of the subunits 210 within the cable 200. Here, the subunit jacket 220 has been extruded loosely about the optical fibers 212 so that the fibers may move radially and azimuthally within the confines of the subunit 210. This feature allows the subunits to easily deform, and thereby improve packing density of the subunits within the cable 200 (FIG. 2). Accordingly, the free space 250 within the unit is substantial such that the subunit jacket 220 is configured for shaping upon assembly in the cable 200.

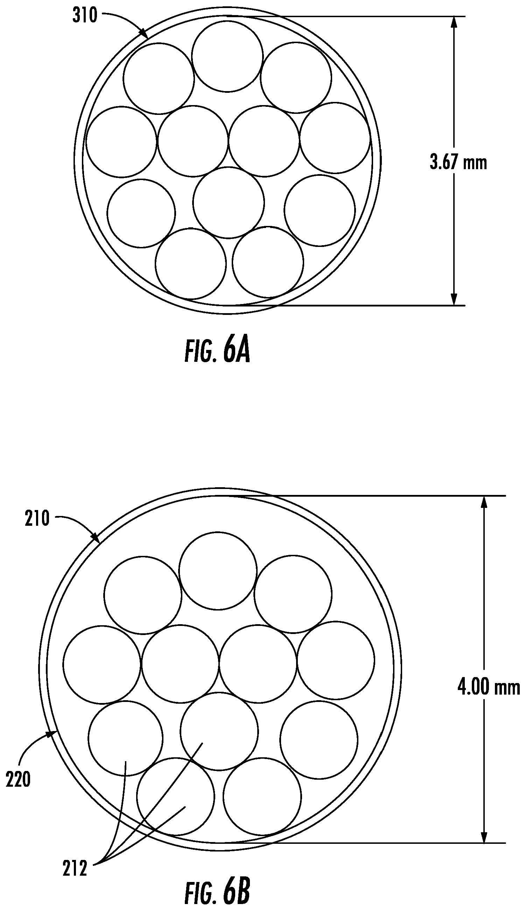

FIGS. 6A and 6B illustrate a free space comparison between the tightly packed subunit 310 of FIG. 4 compared to the loosely packed subunit 210 of FIG. 2. As shown in FIG. 6A, the subunit 310 has an inner diameter of 3.67 millimeters (mm), and as shown in FIG. 6B, increasing the inner diameter of subunit 210 to 4 millimeters provides significant room for fiber movement. Free space is the cross-sectional area inside the subunit divided by the sum of the cross-sectional area of the components inside the subunit jacket. The cross-sectional area of a subunit may be computed as A_{S} = π/4*D², where D is the inside diameter of the subunit. The cross-sectional area of the tight buffered fibers may be computed as A_{tb} = 12*π/4*d², where d is the diameter of an individual tight buffered fiber. The free space may thus be calculated as FS = (A_{S} - A_{tb}) / A_{S}. Using these formulas to calculate the free space for subunit 310 in FIG. 6A results in A_{S} =10.58 mm², A_{tb} = 7.63 mm², and FS = 28%. The free space calculations for subunit 210 in FIG. 6B results in A_{S} =12.57 mm², A_{tb} = 7.63 mm², and FS = 39%. Increasing the free space in this manner allows the fibers freedom of movement and thus increases the flexibility of the cable 200, for example. In accordance with the present invention, the free space in a preferable 12 fiber subunit 210 in a unitary cable such as cable 200 should be greater than 35%.

Each subunit 210 is also preferably strength-member free which facilitates shaping of the subunits 210 in the cable 200. However, strength members, such as a central strength member 214 shown in FIG. 2, which may be a glass reinforced plastic (GRP) rod, and tensile yarns 216 may be placed within the cable jacket in between or around the subunits 210. The strength member 214 and tensile yarns 216 provide strength to the cable 200 and a method of strain relieving the cable 200 by attaching the strength member 214 and/or tensile yarns 216 to a rack or housing into which the cable is installed. Tensile yarns 216 may be any suitable strength yarns common in the field, such as aramid fibers, and located only between the subunit cables 210 and the cable jacket 221. Adequate physical protection can be achieved with the present invention using fewer aramid fibers or other strength members than would be employed if the strength members or yarns were placed into each individual subunit as is typical in conventional unitized cables, such as that shown in FIG. 1. Elimination of these strength members not only allows reduction in the outer dimension of the unitized cable 200, but also reduces cost by eliminating components.

The strength members may be removed from the subunits because the housings provide adequate protection for the optical fibers. Likewise, the subunit jacket can be made very thin because it no longer needs to provide crush and impact protection for the optical fibers. Both crush and impact protection are provided by the cable jacket and by the housing upon installation of the cable.

In addition, the subunit jacket 220 is preferably manufactured from one or more materials that allow the jackets to have a low tear strength, which enables toolless access to the optical fibers. Thus, subunit jackets 220 may thus be removed by pinching and pulling with low forces, including as finger pulling forces.

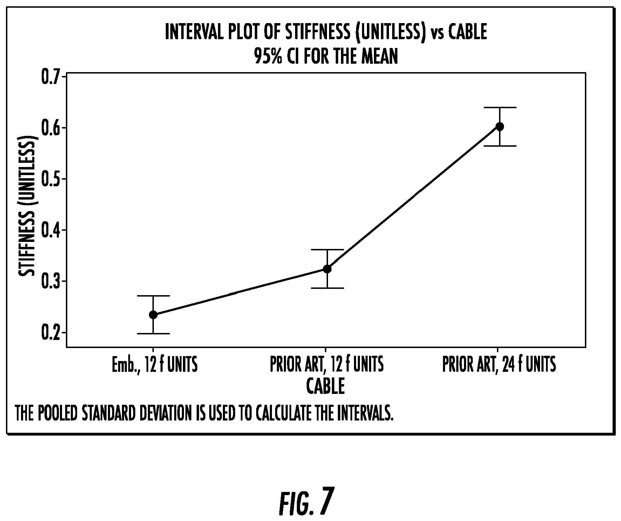

FIG. 7 is a graphical representation, showing the stiffness of embodiments disclosed herein compared to prior art cable configurations. Cable stiffness is measured using a three-point bend test in accordance with ASTM D790. 15. The stiffness is inversely proportional to the flexibility, so a lower stiffness indicates increased flexibility.

Embodiments of unitized fiber optic cables, in accordance with embodiments disclosed herein, and two prior art cables were tested for stiffness. One prior art cable included 12-fiber subunits that were round and had fibers tightly packed within the subunit, and the other prior art cable had 24-fiber subunits similarly configured. FIG. 7 graphically shows 95 % confidence levels of the stiffness for each cable type. The 95 % confidence level, for the embodiments disclosed herein does not overlap with the prior art cables, which demonstrates that the prior art cables have less flexibility.

The packing density of tight buffered optical fibers within a cable may be defined as the number of optical fibers divided by the cable core area. The area inside the cable jacket is used in this calculation because different embodiments may require a thicker cable jacket over the same cable core. For example, a plenum cable might require a thicker jacket than a riser cable of the same fiber count. The prior art cable with 12-fiber subunits used in the stiffness test had a tight buffered fiber packing density of 37 fibers/cm². The prior art cable with 24-fiber subunits used in the stiffness test had a tight buffered fiber packing density of 42 fibers/cm². The embodiments disclosed herein that have 12-fiber subunits 210, which were used in the stiffness test, for example, had a tight buffered fiber packing density of at least 59 fibers/cm². This was based on the cable 200 having a total of 144 tight buffered fibers 212 inside a subunit 210 having a wall thickness J_{T} of 0.15 ±.07 millimeters. The subunits 210 have a free space greater than 35% based on an inner diameter of the subunit 210 being 4 millimeters or less. An average inner diameter (ID) of the cable jacket 211 is about 16.5 millimeters and the wall thickness of the cable jacket 211 is 1.25 millimeters so the cable 200 has an average outside diameter of about 19 millimeters. A packing density of greater than 50 fibers/cm² for a unitized cable having 900 µm tight buffered fibers is preferable.

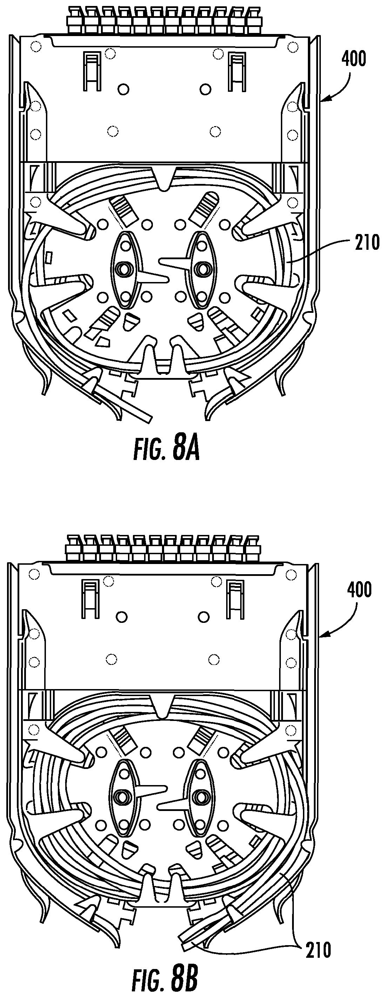

As shown in FIGS. 8A and 8B, the advantages of increased flexibility allow the subunits 210 to be efficiently used in installation assemblies, including being easily routed into a splice cassette 400, for example, whereas conventional cable subunits of the type shown as 310 in FIG. 4 need to have the fibers accessed prior to entering the splice cassette due to the lack of pliability of the subunit. For conventional cable subunits, the optical fibers are first accessed and fed into a braided tubing provided with the splice cassette that acts as protection for routing the fibers inside the splice cassette. The smaller outside of subunits 210 and the increased flexibility provided by the loose design allow movement of the 900 micron (µm) fibers so that the subunits can bend and conform to the shape needed. As shown in FIGS. 8A and 8B, a 12 fiber subunit 210 may now be routed to an interior compartment or other holding feature of the splice cassette 400, saving time and reducing risk by eliminating the need to use a tool to access the subunit. FIG. 8A illustrates a single subunit 210 being routed through the splice cassette 400 and FIG. 8B illustrates two subunits 210 being simultaneously routed through the splice cassette.

It will be apparent to those skilled in the art that various modifications and variations can be made without departing from the scope of the disclosed embodiments. Since modifications combinations, sub-combinations and variations of the disclosed embodiments incorporating the substance of the embodiments may occur to persons skilled in the art, the disclosed embodiments should be construed to include everything within the scope of the appended claims.

## Claims

1. A unitized fiber optic cable (200), comprising:
a plurality of fiber optic subunits (210), each fiber optic subunit (210) including a plurality of tight buffered optical fibers (212);
a subunit jacket (220) surrounding each fiber optic subunit (210); and
a cable jacket (221) surrounding the plurality of fiber optic subunits (210), wherein at least some of the plurality of fiber optic subunits (210) are shaped into non-circular shapes when disposed inside the cable jacket (221), **characterized in that**
a free space in each of the fiber optic subunits (210) is greater than 35%.

2. The unitized fiber optic cable (200) of claim 1, wherein the total number of optical fibers (212) in the unitized fiber optic cable (200) ranges from 48 optical fibers to 144 optical fibers.

3. The unitized fiber optic cable (200) of claims 1 or 2, wherein a thickness of the subunit (210) jacket is 0.15 ± 0.07 millimeters.

4. The unitized fiber optic cable (200) of any of claims 1 to 3, wherein each fiber optic subunit (210) is configured to substantially deform into a non-circular shape.

5. The unitized fiber optic cable (200) of any of claims 1 to 4, wherein the plurality of fiber optic subunits (210) comprises twelve subunits (210), and wherein four of the fiber optic subunits (210) are substantially surrounded by eight of the fiber optic subunits (210).

6. The unitized fiber optic cable (200) of any of claims 1 to 5, wherein an average cross-sectional diameter of the subunit jacket (220) is about 4 millimeters.

7. The unitized fiber optic cable (200) of any of claims 1 to 6, further comprising at least one strength member (214) disposed within the cable jacket (221).

8. The unitized fiber optic cable (200) of any of claims 1 to 7, further comprising strength yarns (216) disposed within the cable jacket (221).

9. The unitized fiber optic cable (200) of any of claims 1 to 8, wherein the unitized cable (200) has a packing density of greater than 50 fibers/cm².

10. The unitized fiber optic cable (200) of claim 1, wherein at least some of the plurality of optical fibers (212) are configured to move radially and azimuthally within each fiber optic subunit (210).

11. The unitized fiber optic cable (200) of any of claims 1 to 10, wherein the outer diameter of each fiber (212) ranges from about 0.50 mm to about 0.90 mm. '

12. An installation assembly, comprising:
a unitized fiber optic cable (200), comprising:
a plurality of fiber optic subunits (210), each fiber optic subunit (210) including a plurality of tight buffered optical fibers;
a subunit jacket (220) surrounding each fiber optic subunit (210); and
a cable jacket (221) surrounding the plurality of fiber optic subunits (210),
wherein at least some of the plurality of fiber optic subunits (210) are shaped into non-circular shapes when disposed inside the cable jacket (221) and a free space in each of the fiber optic subunits (210) is greater than 35%; and
a splice cassette (400) having at least one of the plurality of fiber optic subunits (210) routed within an interior compartment without requiring removal of the subunit jacket (220).

13. The installation assembly of claim 12, wherein a thickness of the subunit jacket (220) is 0.15 ± 0.07 millimeters.

14. The installation assembly of claims 12 or 13, wherein each fiber optic subunit (210) is configured to substantially deform into a non-circular shape.

15. The installation assembly of any of claims 12 to 14, wherein an average cross-sectional diameter of the subunit jacket (220) is about 4 millimeters.

## Patentansprüche

1. Unitisiertes Glasfaserkabel (200), das Folgendes umfasst:
mehrere Glasfaser-Untereinheiten (210), wobei jede Glasfaser-Untereinheit (210) mehrere dicht gepufferte optische Fasern (212) beinhaltet;
einen Untereinheitsmantel (220), der jede Glasfaser-Untereinheit (210) umgibt; und
einen Kabelmantel (221), der die mehreren Glasfaser-Untereinheiten (210) umgibt, wobei zumindest einige der mehreren Glasfaser-Untereinheiten (210) in nicht kreisförmige Formen geformt sind, wenn sie innerhalb des Kabelmantels (221) angeordnet sind, **dadurch gekennzeichnet, dass**
ein Freiraum in jeder der Glasfaser-Untereinheiten (210) größer als 35 % ist.

2. Unitisiertes Glasfaserkabel (200) nach Anspruch 1, wobei die Gesamtanzahl optischer Fasern (212) in dem unitisierten Glasfaserkabel (200) im Bereich von 48 optischen Fasern bis 144 optischen Fasern liegt.

3. Unitisiertes Glasfaserkabel (200) nach Anspruch 1 oder 2, wobei eine Dicke des Mantels der Untereinheit (210) 0,15 ± 0,07 Millimeter beträgt.

4. Unitisiertes Glasfaserkabel (200) nach einem der Ansprüche 1 bis 3, wobei jede Glasfaser-Untereinheit (210) dazu konfiguriert ist, sich im Wesentlichen in eine nicht kreisförmige Form zu verformen.

5. Unitisiertes Glasfaserkabel (200) nach einem der Ansprüche 1 bis 4, wobei die mehreren Glasfaser-Untereinheiten (210) zwölf Untereinheiten (210) umfassen, und wobei vier der Glasfaser-Untereinheiten (210) im Wesentlichen von acht der Glasfaser-Untereinheiten (210) umgeben sind.

6. Unitisiertes Glasfaserkabel (200) nach einem der Ansprüche 1 bis 5, wobei ein durchschnittlicher Querschnittsdurchmesser des Untereinheitsmantels (220) etwa 4 Millimeter beträgt.

7. Unitisiertes Glasfaserkabel (200) nach einem der Ansprüche 1 bis 6, das ferner mindestens ein Verstärkungselement (214) umfasst, das innerhalb des Kabelmantels (221) angeordnet ist.

8. Unitisiertes Glasfaserkabel (200) nach einem der Ansprüche 1 bis 7, das ferner Festigkeitsgarne (216) umfasst, die innerhalb des Kabelmantels (221) angeordnet sind.

9. Unitisiertes Glasfaserkabel (200) nach einem der Ansprüche 1 bis 8, wobei das unitisierte Kabel (200) eine Packungsdichte von mehr als 50 Fasern/cm² aufweist.

10. Unitisiertes Glasfaserkabel (200) nach Anspruch 1, wobei zumindest einige der mehreren optischen Fasern (212) dazu konfiguriert sind, sich radial und azimutal innerhalb jeder Glasfaser-Untereinheit (210) zu bewegen.

11. Unitisiertes Glasfaserkabel (200) nach einem der Ansprüche 1 bis 10, wobei der Außendurchmesser jeder Faser (212) im Bereich von etwa 0,50 mm bis etwa 0,90 mm liegt.

12. Installationsanordnung, die Folgendes umfasst:
ein unitisiertes Glasfaserkabel (200), das Folgendes umfasst:
mehrere Glasfaser-Untereinheiten (210), wobei jede Glasfaser-Untereinheit (210) mehrere dicht gepufferte optische Fasern beinhaltet;
einen Untereinheitsmantel (220), der jede Glasfaser-Untereinheit (210) umgibt; und
einen Kabelmantel (221), der die mehreren Glasfaser-Untereinheiten (210) umgibt, wobei zumindest einige der mehreren Glasfaser-Untereinheiten (210) in nicht kreisförmige Formen geformt sind, wenn sie innerhalb des Kabelmantels (221) angeordnet sind, und ein Freiraum in jeder der Glasfaser-Untereinheiten (210) größer als 35 % ist; und
eine Spleißkassette (400) mit mindestens einer der mehreren Glasfaser-Untereinheiten (210), die innerhalb eines Innenraums geführt sind, ohne dass ein Entfernen des Untereinheitsmantels (220) erforderlich ist.

13. Installationsanordnung nach Anspruch 12, wobei eine Dicke des Untereinheitsmantels (220) 0,15 ± 0,07 Millimeter beträgt.

14. Installationsanordnung nach Anspruch 12 oder 13, wobei jede Glasfaser-Untereinheit (210) dazu konfiguriert ist, sich im Wesentlichen in eine nicht kreisförmige Form zu verformen.

15. Installationsanordnung nach einem der Ansprüche 12 bis 14, wobei ein durchschnittlicher Querschnittsdurchmesser des Untereinheitsmantels (220) etwa 4 Millimeter beträgt.

## Revendications

1. Câble à fibres optiques unitarisé (200), comprenant :
une pluralité de sous-unités de fibres optiques (210), chaque sous-unité de fibres optiques (210) comprenant une pluralité de fibres optiques à tampon serré (212) ;
une gaine de sous-unité (220) entourant chaque sous-unité de fibres optiques (210) ; et
une gaine de câble (221) entourant la pluralité de sous-unités de fibres optiques (210), où au moins certaines de la pluralité de sous-unités de fibres optiques (210) sont formées avec des formes non circulaires lorsqu'elles sont disposées à l'intérieur de la gaine de câble (221), **caractérisée en ce que**
un espace libre dans chacune des sous-unités de fibres optiques (210) est supérieur à 35 %.

2. Câble à fibres optiques unitarisé (200) selon la revendication 1, dans lequel le nombre total de fibres optiques (212) dans le câble à fibres optiques unitarisé (200) est compris entre 48 fibres optiques et 144 fibres optiques.

3. Câble à fibres optiques unitarisé (200) selon la revendication 1 ou la revendication 2, dans lequel l'épaisseur de la gaine de sous-unité (210) est de 0,15 ± 0,07 millimètre.

4. Câble à fibres optiques unitarisé (200) selon l'une quelconque des revendications 1 à 3, dans lequel chaque sous-unité de fibres optiques (210) est configurée pour se déformer sensiblement en une forme non circulaire.

5. Câble à fibres optiques unitarisé (200) selon l'une quelconque des revendications 1 à 4, dans lequel la pluralité de sous-unités de fibres optiques (210) comprend douze sous-unités (210), et dans lequel quatre des sous-unités de fibres optiques (210) sont sensiblement entourées par huit des sous-unités de fibres optiques (210).

6. Câble à fibres optiques unitarisé (200) selon l'une quelconque des revendications 1 à 5, dans lequel le diamètre moyen de la section transversale de la gaine de sous-unité (220) est d'environ 4 millimètres.

7. Câble à fibres optiques unitarisé (200) selon l'une quelconque des revendications 1 à 6, comprenant en outre au moins un élément de renforcement (214) disposé à l'intérieur de la gaine de câble (221).

8. Câble à fibres optiques unitarisé (200) selon l'une quelconque des revendications 1 à 7, comprenant en outre des fils de renforcement (216) disposés à l'intérieur de la gaine de câble (221).

9. Câble à fibres optiques unitarisé (200) selon l'une quelconque des revendications 1 à 8, dans lequel le câble unitarisé (200) a une densité de remplissage supérieure à 50 fibres/cm².

10. Câble à fibres optiques unitarisé (200) selon la revendication 1, dans lequel au moins certaines de la pluralité de fibres optiques (212) sont configurées pour se déplacer radialement et selon l'azimut à l'intérieur de chaque sous-unité de fibres optiques (210).

11. Câble à fibres optiques unitarisé (200) selon l'une quelconque des revendications 1 à 10, dans lequel le diamètre extérieur de chaque fibre (212) est compris entre environ 0,50 mm et environ 0,90 mm.

12. Ensemble d'installation, comprenant :
un câble à fibres optiques unitarisé (200), comprenant :
une pluralité de sous-unités de fibres optiques (210), chaque sous-unité de fibres optiques (210) comprenant une pluralité de fibres optiques à tampon serré ;
une gaine de sous-unité (220) entourant chaque sous-unité de fibres optiques (210) ; et
une gaine de câble (221) entourant la pluralité de sous-unités de fibres optiques (210), où au moins certaines de la pluralité de sous-unités de fibres optiques (210) sont formées avec des formes non circulaires lorsqu'elles sont disposées à l'intérieur de la gaine de câble (221) et un espace libre dans chacune des sous-unités de fibres optiques (210) est supérieur à 35 % ; et
une cassette d'épissure (400) comportant au moins une sous-unité de la pluralité de sous-unités de fibres optiques (210) acheminée dans un compartiment intérieur sans qu'il soit nécessaire de retirer la gaine de sous-unité (220).

13. Ensemble d'installation selon la revendication 12, dans lequel l'épaisseur de la gaine de sous-unité (220) est de 0,15 ± 0,07 millimètre.

14. Ensemble d'installation selon la revendication 12 ou la revendication 13, dans lequel chaque sous-unité de fibres optiques (210) est configurée pour se déformer sensiblement en une forme non circulaire.

15. Ensemble d'installation selon l'une quelconque des revendications 12 à 14, dans lequel le diamètre moyen de la section transversale de la gaine de sous-unité (220) est d'environ 4 millimètres.
